# EUROPÄISCHE PATENTANMELDUNG

(11) **EP 1 006 441 A2**
(43) Veröffentlichungstag der Anmeldung: **07.06.2000**
(21) Anmeldenummer: 99122236.5
(22) Anmeldetag: 08.11.1999
(51) Int. Cl.: G06F 9/445

(54) **Verfahren und Vorrichtung zur mindestens von der Zeit abhängigen Bereitstellung von Daten und/oder Applikationen in mindestens einem Datenspeicher und/oder Mikroprozessor eines mobilen Datenträgers**

(30) Priorität: 08.11.1998 DE 19852533; 11.03.1999 DE 19910733
(71) Anmelder: Höfle, Florian, D-81825 München (DE)
(72) Erfinder: Höfle, Florian, D-81825 München (DE)
(74) Vertreter: Hoffmann, Klaus-Dieter, Dipl.-Ing.

(57) **Zusammenfassung**

Die Erfindung bezieht sich auf eine Vorrichtung zur zeitabhängigen Bereitstellung von Daten und/oder Applikationen in mindestens einem Datenspeicher und/oder Mikroprozessor eines mobilen Datenträgers, der mit einem Lese-/Schreibgerät gekoppelt ist, das wiederum mit einem Applikationsspeicher verbunden ist. Da nicht alle Applikationen auf derselben Zeitschiene benötigt werden, soll mit der Vorrichtung eine Segmentierung in zeitliche Abhängigkeit gebracht werden können. Zu diesem Zweck ist eine die Segmentierung des Datenspeichers und/oder Mikroprozessors des mobilen Datenträgers in zeitlicher Abhängigkeit steuernde, dynamische Fenster aufweisende Kontrolleinrichtung vorgesehen, über die nach Erstprogrammierung des Datenspeichers und/oder des Mikroprozessors allein ein Zugriff auf jedes Segment möglich und der Datenspeicher und/oder Mikroprozessor innerhalb der Segmente so steuerbar ist, daß jede Applikation zeitabhängig dem Segment zuweisbar und letzteres nach zeitlichem Ablauf automatisch löschbar ist, wobei über die dynamischen Fenster der Kontrolleinrichtung allen autorisierten Applikationen die gleichen Informationen zuführbar sind und der Speicherplatz auf die gleichzeitig verwendeten Applikationen begrenzt ist.

## Beschreibung

Die Erfindung betrifft ein Verfahren und eine Vorrichtung zur mindestens von der Zeit abhängigen Bereitstellung von Daten und/oder Applikationen in mindestens einem Datenspeicher und/oder Mikroprozessor eines mobilen Datenträgers, der mit einem Lese-/Schreibgerät verbunden ist, das wiederum mit einem mit diesem verbundenen Applikationsrechner (Progranmnmierstation) verbunden ist, von dem (der) dem Datenspeicher und/oder Mikroprozessor bei der Erstinitialisierung jeder Applikation mindestens ein Speicherbereich zugewiesen und der Datenspeicher und/oder Mikroprozessor bei der Erstprogrammierung vollständig auf ein statisches Segment programmiert wird.
Mobile Datenträger ähnlich einer Kontaktchipkarte mit oder ohne Mikroprozessor und kontaktlosem Schreib-Lesespeicher sind in verschiedenen Bauformen bekannt wie z.B. ISO-Karten, Chips, Schlüsselanhänger und dgl. . Von allen diesen bzw. auf alle diese Medien kann Information gelesen bzw. geschrieben werden, und diese Medien werden dazu verwendet, Daten verschiedenster Anwendungen ohne Vernetzung vor Ort zur Verfügung zu stellen oder zu manipulieren.

Bei der Erstinitialisierung des Datenspeichers und/oder Mikroprozessors eines solchen mobilen Datenträgers wird jeder Applikation ein Speicherbereich zugeordnet, so daß alle Applikationen dann aufden ihnen zugeordneten Speicherbereich zugreifen können. Kommt eine neue Applikation hinzu, muß ihr erst auf einer Programmierstation ein Speicherbereich zugeordnet werden. Dieser Vorgang ist sicherheitskritisch und kann nur in einem überwachten Bereich erfolgen. Hinzu kommt, daß die Größe des Applikationsspeichers auf dem Datenträger auf die bei der Erstinitialisierung festgelegte Größe begrenzt ist. Wird die Applikation nicht mehr benötigt, muß der Speicherbereich an einer Programmierstation wieder freigegeben werden, was umständlich und sicherheitskritisch ist. Kann dagegen jeder auf den Applikationsspeicher frei zugreifen, besteht keine Manipulationssicherheit, d.h., es ist dann der sogenannnte Fall der statischen Segmentierung gegeben.

Ein weiteres Problem stellt die Information in den einzelnen Segmenten, also in dem segment-/applikationsspezifischen Speicherbereich dar. Jede Applikation hat ihre eigenen Informationen. Ein geregelter Zugriffeiner Applikation auf die Daten einer anderen ist nicht möglich, da hierzu nur bei besonderen Absprachen der Anbieter unter Inkaufnahme eines Manipulationsrisikos die Möglichkeit besteht. Es gibt aber Informationen wie Geldbeträge, Benutzergruppenzugehörigkeit usw., die von mehreren Applikationen sinnvollerweise verwendet werden sollten. Auch sind Datenspeicher in ihrer Speicherkapazität begrenzt. Ein Datenspeicher kann bei einer statischen Segmentierung nur eine endliche Anzahl von Segmenten und damit Anwendungen aufnahmen.

Da nicht alle Applikationen auf derselben Zeitschiene benötigt werden, ist es eine Aufgabe der Erfindung, ein Verfahren und eine Vorrichtung der eingangs erwähnten Art zur Verfügung zu stellen, mit dem bzw. der eine Segmentierung in zeitlicher Abhängigkeit gebracht werden kann.

Zu diesem Zweck wird erfindungsgemäß eine die Segmentierung des Datenspeichers und/oder Mikroprozessors des Datenträgers in zeitlicher Abhängigkeit steuernde, dynamische Fenster aufweisende Kontrolleinrichtung (DSRD-Dynamic Segmentation Rules Device) vorgesehen, über die nach Erstprogrammierung des Datenspeichers und/oder Mikroprozzesors allein ein Zugriff auf jedes Segment möglich und der Datenspeicher und/oder Mikroprozessor innerhalb des Segmentes so steuerbar ist, daß jede Applikation zeitabhängig (in geforderten Zeiten von Null bis unendlich) dem Segment zuweisbar und letzteres nach zeitlichem Ablaufautomatisch löschbar ist, wobei über die dynamischen Fenster der Kontrolleinrichtung allen autorosierten Applikationen die gleichen Informationen zuführbar sind und der Speicherplatz auf die gleichzeitig verwendeten Applikationen begrenzt ist.

Zur Erweiterung des Einsatzbereiches des Verfahrens bzw. der Vorrichtung wird erfindungsgemäß eine die Segmentierung des Datenspeichers und/oder Mikroprozessors des mobilen Datenträgers in Abhängigkeit von der Zeit und/oder in Abhängigkeit von mindestens einer Bedingung (mindestens eine Regel beinhaltenden Information) steuernde, dynamische Fenster aufweisende Kontrolleinrichtung (DSRD-Dynamic Segmentation Rules Device) vorgesehen, über die nach Ersprogrammierung des Datenspeichers und/oder Mikroprozessors allein ein Zugriff auf jedes Segment, in dem neben der Zeit mindestens eine weitere, für eine entsprechende Applikation zur Verfügung stehende Bedingung (mindestens eine Regel enthaltende Information) gespeichert ist, möglich und der Datenspeicher und/oder Mikroprozessor innerhalb des Segmentes so steuerbar ist, daß jede Applikation in Abhängigkeit von der mindestens einen Bedingung (mindestens eine Regel enthaltenden Information) jedem Segment zuweisbar ist, mehrere der Segmente entsprechend der Anzahl der gespeicherten Regeln zu einer logischen Verkettung verknüpfbar sind und jedes Segment nach zeitlichem Ablauf und/oder erfolgter Bewertung der mindestens einen Bedingung (mindestens eine Regel enthaltenden Information) automatisch löschbar ist, und daß über die dynamischen Fenster der Kontrolleinrichtung allen automatisierten Applikationen auch die gleichen Informationen zuführbar sind.

Die Kontrolleinrichtung (DSRD) übernimmt die Verwaltung der Zugriffe, denn jeder Zugriff erfolgt über den Austausch von Schlüsseln. Jede Applikation kann im Rahmen der Rechte auf die allgemeinen Segmente zugreifen oder eigene von der Applikation ohne Programmierstation bilden.

Die erweiterte erfindungsgemäße Vorrichtung ermöglicht neben der zeitabhängigen Bereitstellung von Daten auch die Bereitstellung letzterer in Abhängigkeit von einer anderen Bedingung alleine oder in Verbindung mit letzterer mit der Zeit, da in jedem DSRD-Segment neben der Zeit (die auch unendlich sein kann) mindestens eine weitere Information gespeichert ist, die der entsprechenden Applikation zur Verfügung steht. Die in der weiteren Information enthaltene Regel wird mindestens auf eine andere Applikationsinformation bezogen und von der Kontrolleinrichtung (DSRD) zur Beurteilung der Gültigkeit des Segmentes angewendet. Von Vorteil ist, daß gemäß der Erfindung auch mehrere Regeln gespeichert sein können, die mehrere Segmente in Folge einer logischen Verkettung verknüpfen. Das Ergebnis der Anwendung der gespeicherten Regeln ist immer die Eindeutigkeit der Gültigkeit des Segmentes - gültig oder ungültig -. Die Zeit kann bei der Anwendung ein zusätztliches Regelelement darstellen. Die Anzahl der Verknüpfungen der gespeicherten Applikationsformen ist nur abhängig von der Anzahl der gespeicherten Applikationsinformationen und dem zur Verfügung stehenden Speicher. Bei der Erstinitialisierung wird der Datenträger einmal auf DSRD programmiert und steht dann allen Applikationen im Rahmen der Rechte zur Verfügung. Patentansprüche 3-8 beinhalten vorteilhafte Weiterbildungen.

Die erfindungsgemäße Vorrichtung eignet sich besonders zum Einsatz als elektronisches Ticket z.B. in Schwimmbädern und dgl. Ein elektronischer mobiler Datenträger oder ein Prozessorsystem regelt den Eintritt in ein Schwimmbad. Bei der Erstbenutzung wird das Segment über die Kontrolleinrichtung (DSRD) im Speicher platziert, und je nach Art der Eintrittskarte wird die Gültigkeit über die DSRD-Regeln gesetzt. Hierbei ergeben sich folgende Möglichkeiten:
Möglichkeit 1: nach der Zeit
   Es wird als Bedingung nur die Zeit gespeichert, z.B. eine Jahreskarte, die genau nach einem Jahr ungültig wird.
Möglichkeit 2: nach einer Bedingung
   Es wird die Zeit und die Anzahl der Besuche gespeichert, z.B. eine 10er Karte (d.h. 10 Besuche sind möglich).
Möglichkeit 3: nach einer Bedingung und der Zeit
   Es wird die Zeit und die Anzahl der Besuche gespeichert, z.B. eine 10er Karte, die zu 10 Besuchen innerhalb eines Jahres berechtigt. Die gespeicherte Verknüpfung lautet dann:
   Gültig wenn: Heutiges Datum (Kaufdatum) <= 1 Jahr und vorhandene Punkte < 10

Die Erfindung wird nun anhand der Zeichnungen erläutert. In diesen sind:
**Fig. 1** eine schematische Darstellung einer ersten Ausführungsform der Vorrichtung, bei der die Kontrolleinrichtung (DSRD) im Lese-/Schreibgerät für das Medium (mobiler Datenträger) implantiert ist, und
**Fig. 2** eine schematische Darstellung einer zweiten Ausführungsform der Vorrichtung, bei der die Kon-trolleinrichtung (DSDR) im Medium (mobiler Datenträger) mit eigenem Prozessor implantiert ist.

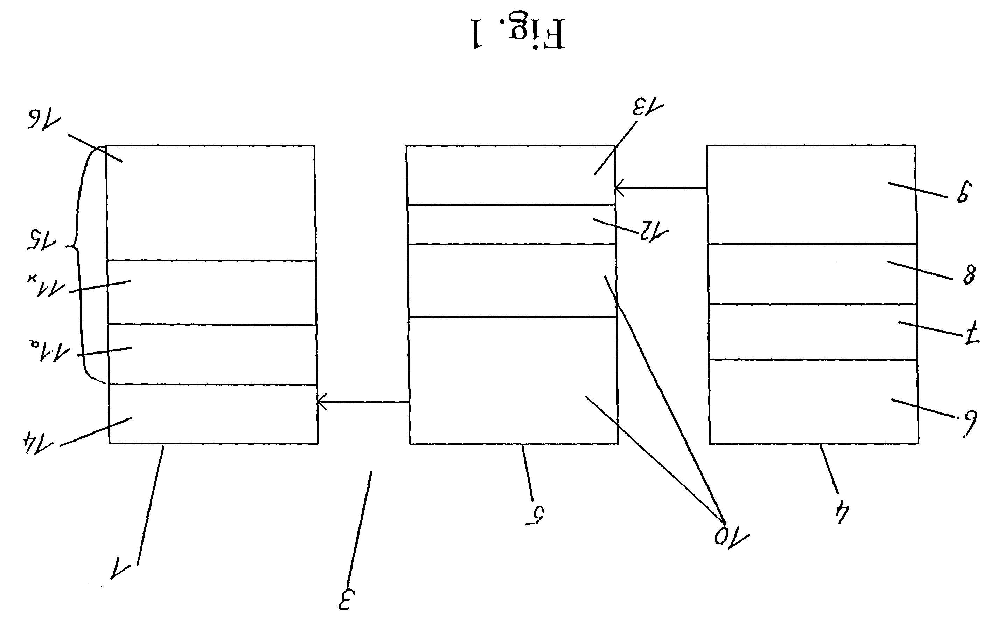

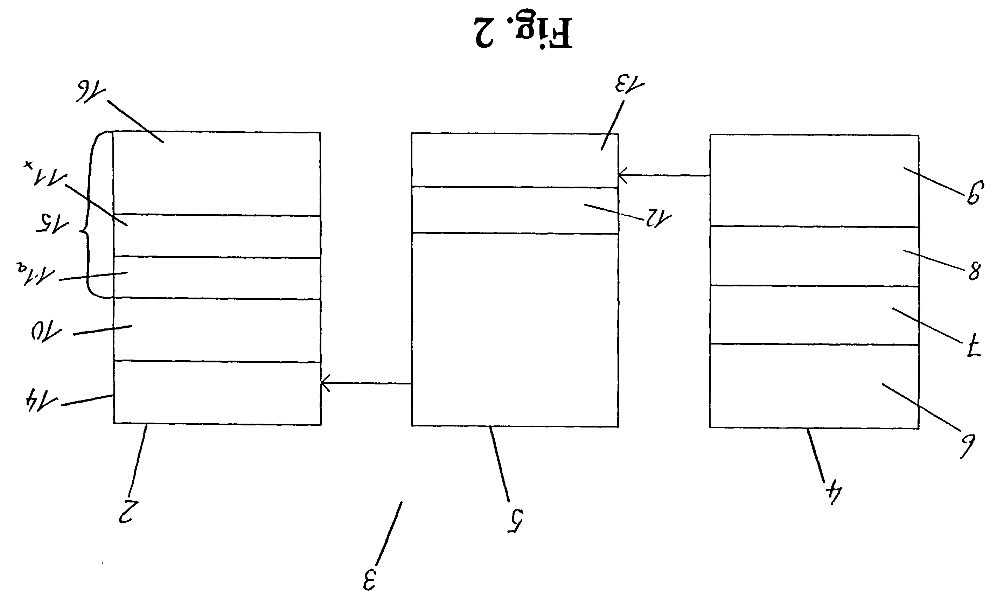

Wie aus den Fig. 1 und 2 hervorgeht, weist die Vorrichtung zur mindestens von der Zeit abhängigen Bereitsstellung von Daten und/oder Applikationen in mindestens einem Datenspeicher 1 und/oder Mikroprozessor 2 eines mobilen Datentragers 3 einen Applikationsrechner 4 auf, der mit einem Lese-/Schreibgerät 5 physikalisch verbunden ist, das wiederum gemäß der ersten Ausführungsform der Vorrichtung nach Fig. 1 mit dem Medium (reiner Speicher des mobilen Datenträgers 3) bzw. gemäß der zweiten Ausführungsform der Vorrichtung nach Fig. 2 mit einem eigenen Prozessor 2 des mobilen Datenträgers 3 physikalisch verbunden ist. Der Applikationsrechner 4 weist die Bereiche Applikation 6, DSRD-Steuerbefehle 7, Übertragungsprotokoll 8 und serielle oder Paralellübertragung 9 auf.

Bei der ersten Ausführungsform der Vorrichtung nach Fig. 1 ist im Lese-/Schreibgerät 5 eine die Segmentierung des Datenspeichers 1 des mobilen Datenträgers 3 in Abhängigkeit von der Zeit und/oder in Abhängigkeit von mindestens einer Bedingung (mindestens eine Regel beinhaltende Information) steuernde, dynymische Fenster aufweisende Kontrolleinrichtung 10 (DSRD-Dynamic Segmentation Rules Device) implantiert, über deren DSRD-Kanal mit Sicherheitssystem nach Erstprogrammierung des Datenspeichers 1 allein ein Zugriff auf jedes DSRD-Segment 11ₐ₋ₓ des Datenspeichers 1 möglich ist. Das Lese-/Schreibgerät 5 weist außerdem die Bereiche Übertragungsprotokoll 12 und serielle oder Parallelübertragung 13 auf. Der Datenspeicher 1 des mobilen Datenträgers 3 ist von der Kontrolleinrichtung 10 so innerhalb der einzelnen Segmente 11ₐ₋ₓ steuerbar, daß jede Applikation in Abhängigkeit von der Zeit (in geforderten Zeiten von Null bis Unendlich) und/oder in Abhängigkeit von der mindestens einen Bedingung (mindestens eine Regel enthaltenden Information) jedem Segment 11ₐ₋ₓ zuweisbar ist, mehrere der Segmente 11ₐ₋ₓ entsprechend der Anzahl der gespeicherten Regeln zu einer logischen Verkettung verknüpfbar sind und jedes Segment 11ₐ₋ₓ nach zeitlichem Ablauf und/oder erfolgter Bewertung der mindestens einen Bedingung (mindestens eine Regel enthaltenden Information) automatisch löschbar ist. Der Datenspeicher 1 des mobilen Datenträgers 3 weist einen Bereich 14 für Empfang, Dekodierung und Übertragung sowie ein statisches festes Segment 15 auf, das von den einzelnen DSRD-Segmenten 11ₐ₋ₓ sowie einen Bereich 16 gebildet wird, der für weitere DSRD-Segmente reserviert ist. Bei der ersten Ausführungsform der Vorrichtung müssen der Applikationsrechner 4 und das Lese-/Schreibgerät 5 über getrennte Prozessorsysteme gesteuert werden. Über die dynamischen Fenster der Kontrolleinrichtung 10 sind allen Applikationen die gleichen Informationen zuführbar, und der Speicherplatz ist auf die gleichzeitig verwendeten Applikationen begrenzt.

Bei der zweiten Ausführungsform der Vorrichtung nach Fig. 2 ist der Applikationsrechner 4 und das Lese- /Schreibgerät 5 entsprechend wie bei der ersten Ausführungsform nach Fig. 1 aufgebaut mit der Ausnahme, daß die Kontrolleinrichtung 10 (DSRD) nicht in dem Lese-/Schreibgerät 5, sondern in dem Datenspeicher bzw. Mikroprozessor 2 des mobilen Datenträgers 3 implantiert ist, der im übrigen hinsichtlich der Bereiche des Speichers entsprechend wie in Fig. 1 aufgebaut ist. Bei der zweiten Ausführungsform der Vorrichtung können der Applikationsrechner 4 und das Lese-/Schreibgerät 5 über ein Prozessorsystem gesteuert werden.

Im Betrieb fordert der Applikationsrechner 4 ein bestehendes Segment 11ₐ₋ₓ an oder möchte ein eigenes anlegen. Es werden somit Daten aus einem Segment 11ₐ₋ₓ angefordert oder auf ein Segment 11ₐ₋ₓ geschrieben. Die Kontrolleinrichtung 10 prüft über ihren DSRD-Kanal die Zugriffsberechtigung der Applikation oder die Möglichkeit für ein neues Segment 11 ₓ, worauf der Datenspeicher 1 des mobilen Datenträgers 3 die Information nach den DSRD-Vorgaben der Kontrolleinrichtung 10 aufnimmt. Zeitlich und/oder nach erfolgter Bewertung nicht mehr relevanter Segmente 11ₐ₋ₓ in der Kontrolleinrichtung 10 werden bei einem Zugriff automatisch gelöscht.

## Patentansprüche

1. Vorrichtung zur mindestens von der Zeit abhängigen Bereitstellung von Daten und/oder Applikationen in mindestens einem Datenspeicher und/oder Mikroprozessor eines mobilen Datenträgers, mit einem mit letzterem verbundenen Lese-/Schreibgerät und mit einem mit diesem verbundenen Applikationsrechner (Programmierstation), von dem (der) dem Datenspeicher und/oder Mikroprozessor bei der Erstinitialisierung jeder Applikation mindestens ein Speicherbereich zuweisbar und der Datenspeicher und/oder Mikroprozessor bei der Erstprogrammierung vollständig auf ein statisches Segment programmierbar ist, **dadurch gekennzeichnet**, daß eine die Segmentierung des Datenspeichers (1) und/oder Mikroprozessors (2) des mobilen Datenträgers (3) in Abhängigkeit von der Zeit und/oder in Abhängigkeit von mindestens einer Bedingung (mindestens eine Regel beinhaltenden Information) steuernde, dynamische Fenster aufweisende Kontrolleinrichtung (10) (DSRD-Dynamic Segmentation Rules Device) vorgesehen ist, über die nach Erstprogrammierung des Datenspeichers (1) und/oder Mikroprozessors (2) allein ein Zugriff auf jedes Segment (11ₐ₋ₓ), in dem neben der Zeit mindestens eine weitere, für eine entsprechende Applikation zur Verfügung stehende Bedingung ( mindestens eine Regel enthaltenden Information) gespeichert ist, moglich und der Datenspeicher (1) und/oder Mikroprozessor (2) innerhalb des Segmentes (11ₐ₋ₓ) so steuerbar ist, daß jede Applikation in Abhängigkeit von der Zeit (in geforderten Zeiten von Null bis Unendlich) und/oder in Abhängigkeit von der mindestens einen Bedingung (mindestens eine Regel enthaltenden Information ) jedem Segment (11ₐ₋ₓ) zuweisbar ist, mehrere der Segmente (11ₐ₋ₓ) entsprechend der Anzahl der gespeicherten Regeln zu einer logischen Verkettung verknüpfbar sind und jedes Segment (11ₐ₋ₓ) nach zeitlichem Ablauf und/oder erfolgter Bewertung der mindestens einen Bedingung (mindestens eine Regel enthaltenden Information) automatisch löschbar ist, und daß über die dynamischen Fenster der Kontrolleinrichtung (10) allen autorisierten Applikationen auch nur die gleichen Informationen zuführbar sind.

2. Vorrichtung zur zeitabhängigen Bereitstellung von Daten und/oder Applikationen in mindestens einem Datenspeicher und/oder Mikroprozessor eines mobilen Datenträgers, mit einem mit letzterem verbundenen Lese-/Schreibgerät und mit einem mit diesem verbundenen Applikationsrechner (Programmierstation), von dem (der) dem Datenspeicher und/oder Mikroprozessor bei der Erstinitialisierung jeder Applikation mindestens ein Speicherbereich zuweisbar und der Datenspeicher und/oder Mikroprozessor bei der Erstprogrammierung vollständig aufein statisches Segment programmierbar ist,
**dadurch gekennzeichnet**, daß
eine die Segmentierung des Datenspeichers (1) und/oder Mikroprozessors (2) des mobilen Datenträgers (3) in zeitlicher Abhängigkeit steuernde, dynamische Fenster aufweisende Kontrolleinrichtung (10) /DSRD-Dynamic Segmentation Rules Device) vorgesehen ist, über die nach Erstprogrammierung des Datenspeichers (1) und/oder Mikroprozessors (2) allein ein Zugriff aufjedes Segment (11ₐ₋ₓ) möglich und der Datenspeicher (1) und/oder Mikroprozessor (2) innerhalb des Segmentes (11ₐ₋ₓ) so steuerbar ist, daß jede Applikation (in geforderten Zeiten von Null bis Unendlich) dem Segment (11ₐ₋ₓ) zuweisbar und letzteres nach zeitlichem Ablauf automatisch löschbar ist, und daß über die dynamischen Fenster der Kontrolleinrichtung (10) allen autorisierten Applikationen die gleichen Informationen zuführbar sind und der Speicherplatz auf die gleichzeitig verwendeten Applikationen begrenzt wird.

3. Vorrichtung nach Anspruch 1 oder 2, **dadurch gekennzeichnet**, daß die Kontrolleinrichtung (10) (DSRD) im Datenspeicher (3) als Betriebssystem implantiert ist.

4. Vorrichtung nach Anspruch 1 oder 2, **dadurch gekennzeichnet**, daß die Kontrolleinrichtung (10) (DSRD) im Lese-/Schreibgerät (5) als Betriebssystem implantiert ist.

5. Vorrichtung nach einem der Ansprüche 1 bis 4, **dadaurch gekennzeichnet**, daß die Kontrolleinrichtung (10) (DSRD) zu allen Applikationen dieselbe Schnittstelle auf unterschiedlichsten Kommunikationsprotokollen hat.

6. Vorrichtung nach einem der Ansprüche 1 bis 5, **dadurch gekennzeichnet**, daß von der Kontrolleinrichtung (10) (DSRD) die interne Struktur und die unterschiedlichen Datenträger (3) aufein für die Applikation gleiches Niveau abstrahierbar sind.

7. Vorrichtung nach einem der Ansprüche 1 bis 6, **dadurch gekennzeichnet**, daß die Kontrolleinrichtung (10) (DSRD) applikationsgesteuert ist.

8. Vorrichtung nach einem der Ansprüche 1 bis 7, **dadurch gekennzeichnet**, daß der Datenträger (3) eine kontaktlose oder Kontakt-Chipkarte mit oder ohne Mikroprozessor, eine Magnetkarte, ein Barcode oder ein induktives Element oder dergleichen ist.

9. Verfahren zur zeitabhangigen Bereitstellung von Daten und/oder Applikationen in mindestens einem Datenspeicher und/oder Mikroprozessor eines mobilen Datenträgers, der mit einem Lese-/Schreibgerät verbunden ist, das wiederum mit einem Applikationsrechner (Programmierstation) verbunden ist, bei dem dem Datenspeicher und/oder Mikroprozessor von dem Applikationsrechner bzw. der Programmierstation bei der Erstinitialisierung jeder Applikation mindestens ein Speicherbereich zugewiesen wird und der Datenspeicher und/oder Mikroprozessor bei der Erstprogrammierung vollständig auf ein statisches Segment programmiert wird,
**dadurch gekennzeichnet**, daß
die Segmentierung des Datenspeichers (1) und/oder Mikroprozessors (2) des mobilen Datenträgers (3) durch eine dynamische Fenster aufweisende Kontrolleinrichtung (10) (DSRD-Dynamic Segmentation Rules Device) in Abhängigkeit von der Zeit und/oder in Abhängigkeit von mindestens einer Bedingung (mindestens eine Regel enthaltenden Information) gesteuert wird, und der Zugriff auf jedes Segment (11ₐ₋ₓ), in dem neben der Zeit mindestens eine weitere, für eine entsprechende Applikation zur Verfügung stehende Bedingung gespeichert wird, nach Erstprogrammierung des Datenspeichers (1) und/oder des Mikroprozessors (2) allein über die Kontrolleinrichtung erfolgt und über diese der Datenspeicher (1) und/oder der Mikroprozessor (2 ) innerhalb des Segmentes (11ₐ₋ₓ) so gesteuert wird, daß jede Applikation in Abhängigkeit von der Zeit (in geforderten Zeiten von Null bis Unendlich) und/oder in Abhängigkeit von der mindestens einen Bedingung (mindestens eine Regel enthaltenden Information) jedem Segment (11ₐ₋ₓ) zuweisbar ist, mehrere der Segmente (11ₐ₋ₓ) entsprechend der Anzahl der gespeicherten Regeln zu einer logischen Verkettung verknüpft werden und jedes Segment (11ₐ₋ₓ) nach zeitlichem Ablauf und/oder erfolgter Bewertung der mindestens einen Bedingung (mindestens eine Regel enthaltenden Information) automatisch gelöscht wird.

10. Verfahren nach Anspruch 9, **dadurch gekennzeichnet**, daß über die dynamischen Fenster der Kontrolleinrichtung (10) allen autorisierten Applikationen nur die gleichen Informationen zugeführt werden.
